# EUROPEAN PATENT APPLICATION

(11) **EP 3 944 903 A1**
(43) Date of publication of application: **02.02.2022**
(21) Application number: 20188524.1
(22) Date of filing: 30.07.2020
(51) Int. Cl.: B05D 1/12, B01D 5/00, B05D 1/14, B05D 3/02, B05D 3/04, B05D 3/14, B05D 5/08, B32B 5/00, B32B 27/00, B82Y 30/00, C09D 5/16, C23C 16/00, F28F 13/18, B05D 3/10, B05D 7/00, F25B 39/04

(54) **SPRAYABLE THIN AND ROBUST CARBON NANOFIBER COMPOSITE COATING FOR EXTREME JUMPING DROPWISE CONDENSATION PERFORMANCE**

(71) Applicant: ETH Zurich, 8092 Zurich (CH)
(72) Inventor: POULIKAKOS, Dimos, 8702 Zollikon (CH); SHARMA, Chander, Patiala 147001 (IN); MILIONIS, Athanasios, 8057 Zürich (CH); DONATI, Matteo, 8046 Zürich (CH); LAM, Cheuk Wing Edmond, 8004 Zürich (CH); TRIPATHY, Abinash, 8427 Rorbas (CH)

(57) **Abstract**

A method for applying a composite coating on a substrate, the method including a step of applying a suspension onto the substrate, wherein said suspension comprises a solvent, polytetrafluorethylene micro particles and carbon nanofibers; and a step of thermal annealing of the substrate.

## Description

The present disclosure relates to a method for applying a composite coating onto a substrate. Further the present disclosure relates to a novel composite coating material. The coating may be, preferably, a thin and robust carbon nanofiber composite which exhibits extreme jumping dropwise condensation performance. The present disclosure also includes a device with the disclosed composite coating, such as a condenser or a water collection device, and thus makes use of its superior robustness, thermal conductivity, and jumping dropwise condensation performance.

In particular and according to a preferred example, the present disclosure describes a thin polytetrafluoroethylene - carbon nanofiber nanocomposite coating with technical advantages, such as improved durability, increased thermal conductivity as well as superhydrophobicity for condensate microdroplets. The coating may be deposited through direct spraying which ensures economical scalability and versatility for a wide range of substrates. The coating sustains coalescence-induced jumping droplet condensation for extended periods under highly demanding condensation conditions. Further, up to ∼ 900% improvement in condensation heat transfer coefficient can be achieved compared to conventional filmwise condensation.

### Background

Condensation of water on surfaces, especially metallic surfaces, is critical for multiple energy conversion processes. Enhancement in condensation heat transfer efficiency often requires surface texturing and hydrophobicity, usually achieved through coatings, to maintain dropwise condensation. However, such surface treatments face conflicting challenges of minimal coating thermal resistance, enhanced coating durability and scalable fabrication.

Heterogeneous condensation on solid surfaces is an essential component of a wide range of industrial processes such as power plant condensers, heat pipes in electronics cooling, dew collectors in atmospheric water collection, and in desalination or separation systems. A significant amount of natural resources can be saved, if even a small enhancement in the overall efficiency of such processes can be achieved. This in turn can ameliorate the continuous increase in energy demand, while mitigating greenhouse emissions and raw material consumption.

One important component toward realizing aforementioned improvement includes enhancing the heat transfer performance in condensers, a key device in many industrial processes. Increased thermal efficiency of the condenser allows reduction in saturation pressure for steam condensation, for example, thereby increasing the enthalpy drop across the turbine and generating the same amount of electricity with less fuel consumption and carbon dioxide emissions. Further, improved condensation characteristics of a surface may enable to provide superior water collection devices.

It is known that on hydrophobic surfaces, the vapor condenses in the form of discrete liquid droplets instead of a film. This effect is known as dropwise condensation (DWC) and can significantly enhance the heat transfer coefficient (HTC) as compared to filmwise condensation (FWC), often occurring subsequently, if the condensate drops are not removed periodically under gravity to avoid formation of a continuous film.

Furthermore, superhydrophobic surfaces can promote an additional gravity-independent droplet departure mechanism through coalescence-induced droplet jumping that results in the ejection of much smaller droplets, leading to further heat transfer enhancement.

Compared to DWC, jumping dropwise condensation (JDWC) is known to further improve the HTC, and reduce the droplet departure size down to 500 nm. Apart from these more common and rather broad condensate removal mechanisms, passive pathways are known, such as the cascading coalescence of condensed drops into microchannels, lubricated surfaces, and biphilic surfaces.

Surfaces in condensers or water collection devices made of metal, such as steel, aluminum or copper, are typically hydrophilic and DWC can be achieved on such surfaces by applying hydrophobic coatings. Numerous such coatings have been developed along with a range of coating techniques, including self-assembled monolayers (SAMs) as described by Y. Song, R. P. Nair, M. Zou, Y. Wang, Nano Res. 2009, 2, 143 and K. Ellinas, S. P. Pujari, D. A. Dragatogiannis, C. A. Charitidis, A. Tserepi, H. Zuilhof, E. Gogolides, ACS Appl. Mater. Interfaces 2014, 6, 6510, spraying as described by A. Milionis, A. Tripathy, M. Donati, C. S. Sharma, F. Pan, K. Maniura-weber, Q. Ren, Ind. Eng. Chem. Res. 2020, 1, physical (PVD) and initiated chemical vapor deposition (iCVD) as described by H. Tavana, A. Amirfazli, A. W. Neumann, Langmuir 2006, 22, 5556 and A. T. Paxson, J. L. Yagüe, K. K. Gleason, K. K. Varanasi, Adv. Mater. 2014, 26, 418.

However, these coatings need to address a number of conflicting challenges, in particular, optimal wettability for efficient shedding of condensate, low thermal resistance, long-term mechanical durability, and scalability of the fabrication process. The coating materials have thermal conductivities at the scale of ∼ 0.1 - 0.5 W m⁻¹ K⁻¹ as described b C. Huang, X. Qian, R. Yang, Mater. Sci. Eng. R Reports 2018, 132, 1, significantly lower compared to metals.

This imposes a restriction on the overall thickness of the coating, due to the associated proportional increase in the thermal resistance. Moreover, minimal thickness requirements also arise from the need to be conformal to micro- and nanotextures required for superhydrophobicity during condensation which may affect the long-term durability. Additionally, the simultaneous need for economical scalability remains unaddressed. Therefore, despite the existing concepts for improving condensation heat transfer, modern industrial condensation processes require improvement, and still rely on the use of uncoated metallic condenser surfaces and FWC. Moreover, this limited condensation performance also impacts water collection devices wherein large potential for increasing their efficiency remains unaddressed.

Summarizing, there is still a need for an improved coating (coating material) which can be used on various substrates, preferably used in connection with condensation-related applications, such as heat exchangers, water collection devices or the like, and a fabrication method for simply applying such a coating on the substrate. The coating and its fabrication method shall address the above described conflicting challenges, in particular optimal wettability for efficient shedding of condensate, low thermal resistance, long-term mechanical durability, and scalability of the fabrication process.

### Problem and Solution

The technical problem is to provide an improved coating material, a substrate coated with the coating material and a device including the said substrate which overcome the above discussed limitations and an improved, scalable method for applying the improved coating onto a substrate. This is solved by the appended claims.

According to an aspect, a method is disclosed for applying (or fabricating/manufacturing/producing) a carbon nanofiber composite coating on a substrate. The method may include a step of applying a liquid suspension onto the substrate. The suspension may include a solvent, polytetrafluorethylene (PTFE) micro particles and carbon nanofibers (CNF). The method may further include a step of thermal annealing of the substrate after the coating was provided on the substrate.

The above discussed limitations of the prior art are overcome by the disclosed method. In particular, the liquid suspension allows a high-scale yet precise and thin application on the substrate. After the solvent has evaporated and the PTFE was molten during the thermal annealing, the PFTE forms a hydrophobic matrix for the CNF. The CNF improve the thermal conductivity of the composite coating and the robustness. Further the CNF form micro- and nanostructures at the surface of the coating which enable superior condensation properties.

According to a further aspect, the suspension may include a polar or polarizable solvent. Further, the solvent preferably may be a liquid at room temperature. The PTFE micro particles may have an average diameter of 10 nm or more, preferably they have an average diameter of 100 nm or more, preferably they have an average diameter of 500 nm to 10 micrometers, more preferably they have an average diameter of 500 nm to 5 micrometers and very preferably they have an average diameter in the range of 0.5 micrometer to 1.5 micrometers. The CNF may have an average diameter of 5 nm or more, preferably they have an average diameter of 10 nm to 500 nm, and very preferably the average diameter is between 10 nm to 200 nm. The average length of the CNF may be in the range from 0.5 micrometers to 1000 micrometers, preferably the average length is in the range of 5 micrometers to 500 micrometers and very preferably the average length is in the range of 5 micrometers to 300 micrometers.

It was found that the use of a polar or polarizable solvent allows suspending the solid particles, i.e. the PTFE micro particles and the CNF, homogenously and stably so that the suspension can be applied onto the substrate efficiently, i.e. a large-scale processing is further facilitated because, e.g., the suspension does not need to be processed very quickly after it was mixed and because, e.g., the suspension concentration is evenly distributed.

According to a further aspect, the suspension may include at least 0.5 wt % of solid particles dissolved in a polar solvent. The balance in the suspension (i.e. a possible difference to 100 wt %) may be formed by the solvent and possibly by inevitable/incidental impurities in the base materials, i.e. in the solvent, the PFTE micro particles, and the CNF.

The described amount of solid particles or the solid fraction of the suspension considers the goals for an efficient application of the suspension, which requires rather lower levels of solids in the suspension, and for producing a homogenously formed and robust layer of a very thin coating on the substrate, which otherwise requires rather higher levels of solids in the suspension.

According to a further aspect, the suspension may include X wt % of polytetrafluorethylene micro particles and Y wt % of carbon nanofibers, wherein the ratio of Y:X is preferably 1:20 or higher, such as 1:15, 1:10, 1:9, 1:5 or the like. Very preferably X is greater than Y.

According to a further aspect, the solvent of the suspension may be an aprotic solvent which further improves the suspension properties, i.e. the solid fraction and especially the CNF can be stably and evenly distributed held in the suspension. The polar aprotic solvent may be one of dichloromethane, chloroform, ethyl acetate, tetrahydrofuran, acetonitrile, acetone, or the like.

According to a further aspect, the solvent of the suspension may be dichloromethane which was found to form a table and homogenous enough suspension to be sprayed, together with the PTFE micro particles and the CNF. Preferably, the suspension consists of dichloromethane, polytetrafluorethylene micro particles and carbon nanofibers; and possibly inevitable impurities. The latter recipe was found to enable forming a superior composite coating with the beneficial technical properties described in accordance with the aspect above.

According to a further aspect, the method may additionally include a step of depositing a metal layer onto one or more surfaces of the substrate before the suspension is applied thereto and before the annealing. The liquid suspension may be applied onto a surface of the metal layer.

The metal layer has shown to improve the adhesion between the composite coating layer and the substrate. Preferably, the metal layer is formed of a metal with a high(er) thermal conductivity, such as aluminum, gold, platinum, titanium, chromium, or the like. The metal layer may be deposited to have a thickness of less than 1 micrometer. Preferably, the thickness is selected to be between 20 nm to 500 nm, more preferably the thickness is in between 50 nm to 300nm. The small thickness allows that the metal layer can be considered negligible in view of the thermal resistance, i.e. preferably the metal layer improves the coating adhesion and hence the robustness without deteriorating the heat transport from the substrate to the composite coating.

According to a further aspect, the step of applying the liquid suspension is performed by spray coating. Spraying the suspension allows for a high degree of control, high scalability and a very homogenous and thin application of the suspension.

According to a further aspect, a step of a plasma treatment is performed after the metal layer was deposited onto the substrate and before the suspension is applied onto the metal layer. The plasma treatment introduces a surface roughness into the metal layer which further improves the adhesion of the composite coating.

According to a further aspect, the thermal annealing is performed after the step of applying the liquid suspension in a non-oxidizing or low-oxygen atmosphere, preferably a nitrogen atmosphere or a vacuum. The temperature profile of the thermal annealing may include a phase of a constant temperature application which is selected to be above the melting point of PTFE. Said temperature may be held until the PTFE is completely molten. Preferably, after the heat application phase, the heating is stopped and the substrate cools down (passively without active cooling measures) in the non-oxidizing atmosphere.

According to a further aspect, a composite coating or a composite coating material (or simply coating material) is provided which includes PTFE and CNF. Said composite coating/coating material may be provided on a substrate by means of the method as described in the aspects above.

According to a further aspect, a substrate may be provided which may be coated with the above described composite coating (material) including PTFE and CNF. Further, a metal layer may be provided between the substrate and the composite layer, wherein the composite layer may be arranged on a surface of the metal layer, preferably the top surface. For optimal robustness and thermal conductivity of the composite coating/coated substrate, the layer made from the composite coating material may have a small "thickness" between one micrometer and ten micrometers, preferably between one micrometer and 5 micrometers, and very preferably 1.5 to 3 micrometers. The coating made by the composite coating material and the metal layer together may form a layered material which can be applied/fabricated/put on a substrate; preferably by at least one of the aspects/features of the method as described above.

According to further aspects, improved devices with a substrate as described above may be disclosed, such as an improved condenser or an improved water collection device. In other words, a substrate of such an improved device may have the composite coating material or the layered material formed thereon, preferably formed by at least one of the aspects/features of the method as described above. The devices may include a condenser, a water desalination device or a water collection device and the substrate may be an inner surface of the tubing of the condenser or any surface of a wall or member of the condenser which can come in contact with a fluid. The substrate may also be a surface of a wall or member of a water collection device, preferably the surface from which water shall be collected by means of jumping dropwise condensation.

In other words, the above aspect may include a device, such as a condenser or a water collection device, which has one or more components. The term "component" shall comprise any part or member of the device, and each component may have one or more surfaces, e.g. the inner surface of a condenser tube or the outer surface of the water collection component. These surfaces or at least one thereof may be covered preferably, according to the above aspect, with the herein disclosed coating/coating material and the preferred method of applying said coating onto said surface(s) may be chosen according to any one of the method aspects above.

As explained above, a further application of the improved condensation properties of the present disclosure/coating can be water harvesting from moist air. Hence, the present disclosure may include the aspect according to which the herein disclosed coating/coating material is employed in combination with a water collection device. During the water collection process, condensate is nucleating and growing on a collection surface of the water collection device. Current existing materials that compose water collection panels suffer from limitations in passive condensate removal due to the fact that they are not hydrophobic enough. For this reason, it is not rare at all that half of the water mass intended to be collected remains on the condensing surface. This remaining water has to be collected by scraping off the surface actively which is cumbersome and ineffective. The coating/coating material of the present disclosure, on the other hand, benefiting from its facile droplet removal mechanism, can be used for such water collection applications, rendering them completely passive, thus improved.

Summarizing, the present disclosure provides a coating with improved condensation heat transfer and durability for a thin but robust superhydrophobic PTFE-CNF nanocomposite which is preferably spray-coated. The addition of CNF to the nanocomposite not only leads to extreme water repellency during condensation due to spontaneous nanotexturing, but also creates a robust matrix with enhanced thermal conductivity. Due to its unique surface topography and bulk composition, combined with its limited thickness achieved through optimization of the spray-coating process, the coating material is able to simultaneously address the above discussed challenges. In particular, JDWC is the predominant mode of condensation. Further, a nine-fold enhancement in HTC compared to FWC on a reference/comparative uncoated substrate of the same material can be achieved. The outstanding performance characteristics of the herein disclosed coating are achieved through a facile, scalable and cost-effective fabrication method, rendering this coating process an excellent versatile and potential candidate for a host of substrates and applications.

In the following, examples are set forth with reference to the attached schematic drawings:
- Fig. 1: shows a schematic of a preferred example of a coating fabrication method according to the present disclosure.
- Fig. 2: shows a schematic of a substrate coated with a PTFE-CNF coating layer according to the present disclosure.
- Fig. 3: shows a test of different fractions of CNF provided in a suspension according to the present disclosure.
- Figs. 4a-f: show scanning electron microscope images of a PTFE-CNF coating layer according to the present disclosure and of a comparative test sample.
- Figs. 5a-d: show optical microscope images of a PTFE-CNF coating layer according to the present disclosure and of comparative test samples.
- Fig. 6a-d: show an evaluation of the heat transfer coefficient of a PTFE-CNF coating layer accordingto the present disclosure and comparative test samples.
- Fig. 7a-d: show an evaluation of the heat transfer coefficient of a PTFE-CNF coating layer accordingto the present disclosure and comparative test samples.
- Fig. 8a-b: show images of a durability test of a PTFE-CNF coating layer according to the present disclosure.

References in the specification to a given example indicate that the example described may include a particular feature, structure, or characteristic, but every example may not necessarily include the particular feature, structure, or characteristic. It should be noted that the description and drawings/figures in particular illustrate the principles of the proposed material/coating and method. It will thus be appreciated that those skilled in the art will be able to devise various combinations and the like that are not explicitly described or shown herein. Furthermore, all examples recited herein are principally intended expressly to be only for pedagogical purposes to aid the reader in understanding the principles of the proposed method and material and the concepts contributed by the inventors to furthering the art, and are to be construed as being without limitation to such specifically recited examples and conditions. Moreover, all statements herein reciting principles, aspects, and embodiments, as well as specific examples thereof, are intended to encompass equivalents thereof.

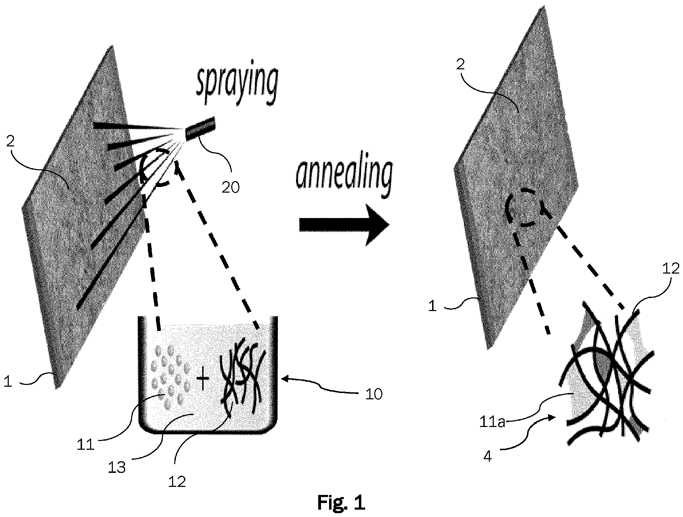

Figure 1 shows steps of a method for fabrication of an improved composite coating 2 according to a preferred aspect of the present disclosure. The method includes the step of applying a suspension 10 onto one or more surfaces of a substrate 1.

The substrate 1 preferably may be made from a metal. Very preferably, the metal material is one of iron, steel, copper, aluminium, titanium, chromium or any other kind of alloy including at least one of these metals. In preferable application scenarios the substrate 1 may be a part of a power plant condenser, a part of a heat pipe used in electronics cooling, a part of a dew collector in atmospheric water collection, or a part of a desalination or separation system.

Figure 1 schematically shows that the suspension 10 is sprayed onto the substrate 1 which is a very preferred option of applying the suspension 10. This preferred option is explained in more detail below. Alternatively, the suspension 10 may be applied onto the substrate 1 by way of pouring the liquid suspension 10 onto the substrate 1 or by way of painting the liquid suspension 10 onto the substrate 1.

A further step shown by Figure 1 includes the (thermal) annealing of the suspension-coated substrate 1 which is also explained in further detail below. The annealing is preferably performed by heating the suspension-coated substrate 1 in an oxygen-reduced or oxygen-free atmosphere. The atmosphere may be generated by vacuum pumping of a heating chamber to achieve at least a low-level vacuum. Preferably, the heating chamber is flooded with nitrogen so that a nitrogen-rich atmosphere is generated which has higher levels of nitrogen and lower levels of oxygen as compared to ambient conditions. The temperature of the annealing step may be kept constant over a predetermined time of one minute or more. The annealing temperature may be selected so that it is at or above the melting point temperature of polytetrafluorethylene (PTFE) which is 327 °C. Preferably, the annealing temperature is set between 327°C and 500°C, very preferably it is between 375 °C and 450°C. If a different matrix material should be selected, the thermal annealing step shall be selected higher than the melting point thereof.

Any alternative material to PTFE may be selected, preferably, based on the condition that the solid material may be hydrophobic and preferably may have a melting point above 100 °C. For example, other fluorinated-polymer materials may be selected. The alternative material shall also be non-toxic for a human in the solid phase. Further, the alternative material may be available, preferably, as micro particles so that the CNF and the micro particles can melt quickly and the molten particles can creep/flow into cavities of the CNF.

The step of thermal annealing is performed for a predetermined time which is sufficient for completely melting the PTFE micro particles 11. During the thermal annealing, further, the remaining solvent 13 evaporates if it should not have been evaporated at ambient conditions before the annealing. After the heat treatment, the substrate 1 with the annealed coating 2 thereon is (passively) cooled down in the oxygen-reduced or oxygen-free atmosphere so that thermal stress can be avoided which would be caused due to a quick and/or actively forced cooling of the coating 2. In other words, e.g., the heating is stopped after expiry of the predetermined time and the substrate 1 is not removed from the oxygen-reduced or oxygen-free atmosphere until it has cooled down to a desired temperature, such as 70 °C, 50 °C, 40 ° C or lower.

The before described two steps of the coating fabrication method are preferably performed in the explained order, i.e. the coating suspension 10 is applied before the annealing step. In further preferred examples of the present disclosure additional optional steps may be added to the method which will be discussed further below.

The suspension 10 is shown schematically in Figure 1 and it includes a solvent 12 which is in a liquid state at room temperature, preferably a polar or polarizable hydrocarbon-based solvent 12, PTFE particles 11 and carbon nanofibers (CNF) 12. In a preferable aspect of this disclosure, the suspension 10 consists of the before mentioned three components and possibly inevitable or incidental impurities.

The PTFE particles 11 (also termed PTFE micro particles) are preferably micro particles which means that they have an average size (such as an equivalent diameter) which is larger than ten nanometers and smaller than 500 micrometers, preferably the average size is between 100 nm and 10 micrometers, and very preferably the average size is between 500 nm and 5 micrometers, and further very preferably, the average diameter of the PTFE micro particles 11 is around one micrometer. The size distribution may be preferably homogenous, such as 50 % or more of the particles of a batch may have the above indicated average size. The PTFE micro particles 11 preferably have a more or less spherical shape and an average diameter in accordance with the before described average size ranges. The PTFE micro particles 11 or the powder of PTFE micro particles may include other chemicals substances as impurities.

The CNF 12 are mainly made of carbon, wherein preferably the fraction of carbon is at least 90 wt % and the balance are one or impurities. More preferably, the carbon fraction is at least 98 wt % and the balance (i.e. the remaining fraction up to 100 wt %) are one or more impurities.

The CNF 12 include fibers and/or entangled fibers of various lengths and fiber diameters. Preferably, the length of the fibers is in the range of one micrometer and up to several micrometers, e.g. up to 100, 200 or 500 micrometers; at least before the CNF 12 were mixed into the solvent 13. The average diameter of the fibers is preferably in the range of a few micrometers, such as 0.5 micrometers, 1 micrometer or more and up to approximately 1000 micrometers or less.

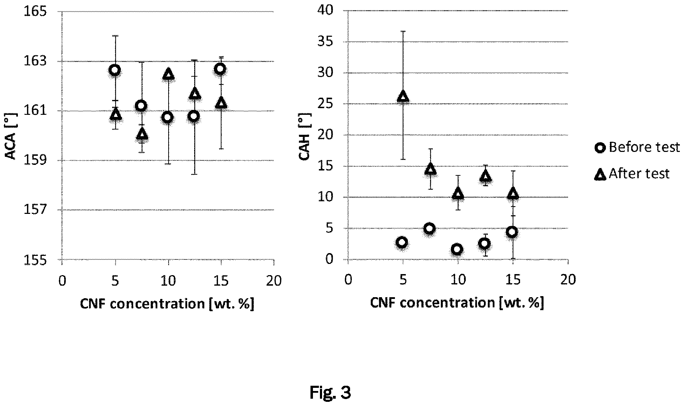

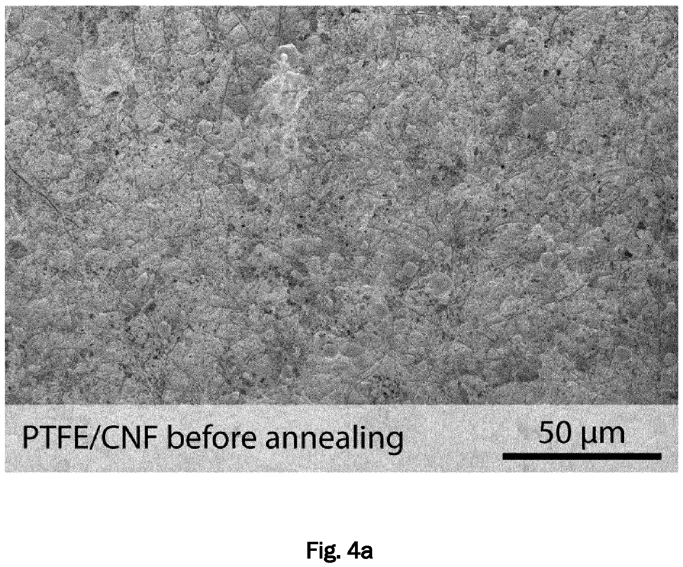

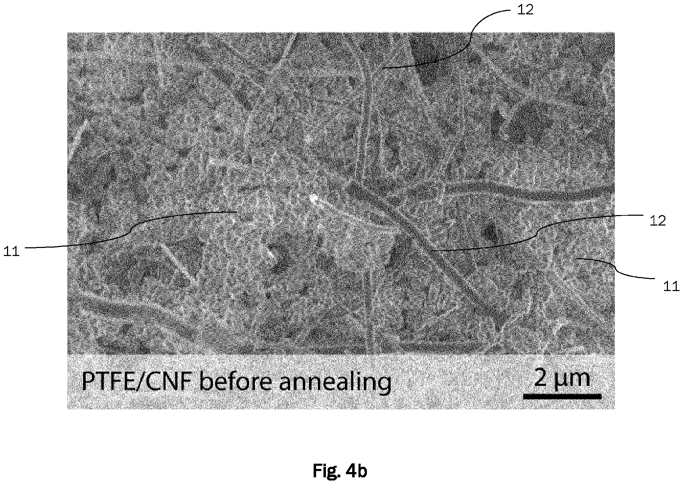

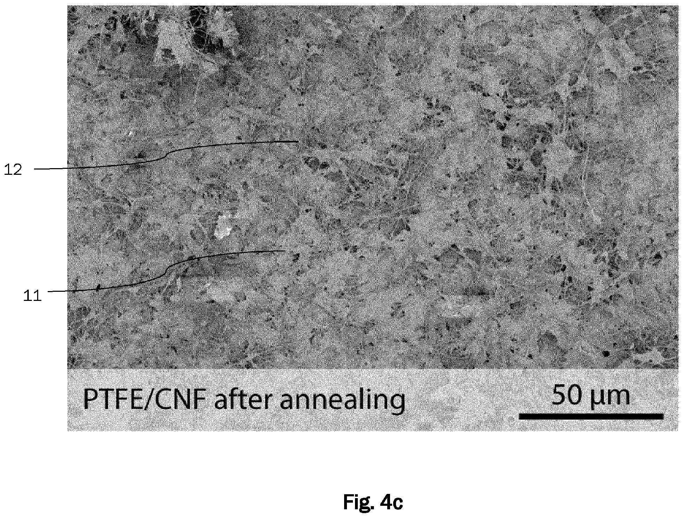

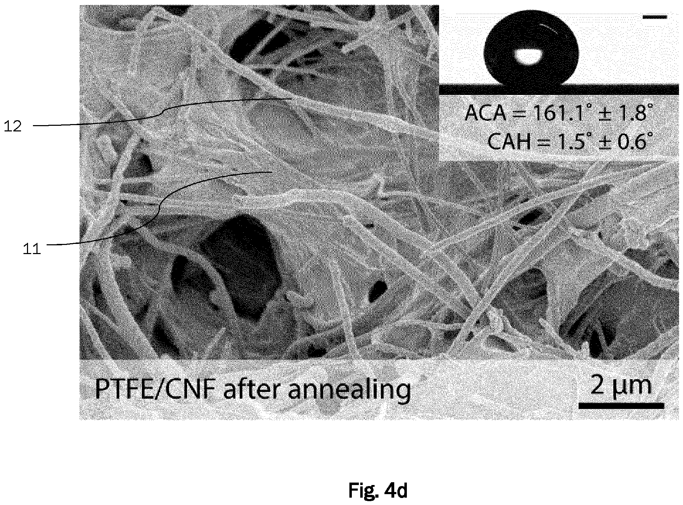

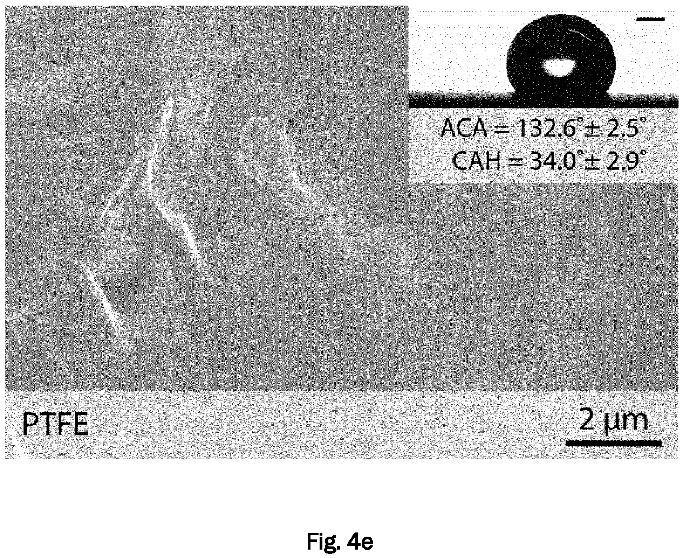

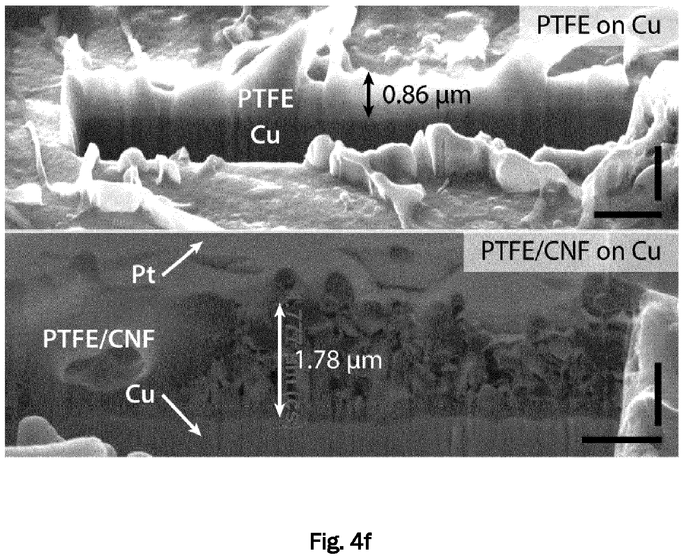

The ratio of CNT 12 and PTFE particles 11 is preferably approximately 1:10, wherein it may also be as low 1:20 and as high as 1:5, with a preferred total solid fraction in the suspension 10 of 0.5 wt% to 3 wt%, preferably 0.5 wt% to 1.5 wt% and very preferably about 1 wt%. In this connection it is noted that Figure 3 shows different advancing contact angle (ACA) and contact angle hysteresis (CAH) depending on the concentration of CNF 12 in the suspension 10. The measurement results which are shown by Figure 3 were measured with a sample that was produced as explained in connection with Figure 4 (see below); the total solid fraction of the suspension at 1 wt. % was not altered while varying the CNF content from 5 wt. % to 15 wt. %. The results further indicate the surface wettability by the advancing and receding contact angles at three random locations of a test sample. The samples were measured directly after the fabrication of the coating layer 2 and subsequently left for 30 minutes in hot deionized water at 95 °C, after which the surface wettability was characterized again ("after test" in Figure 3). Prior to the test, all surfaces are superhydrophobic; ACAs above 160° and CAHs below 5°. After the immersion in hot water, whereas the ACAs remain almost unchanged for all the surfaces, the CAHs exhibit an increase. For 5 wt. % CNF, the CNF loading was not sufficient to maintain consistently low CAH after immersion in hot water. Among the other tested concentrations, 10 wt. % CNF gives the lowest CAH before and after the immersion test. In other words, Figure 3 supports the improvement of the superhydrophobicity by the addition of CNF to the PTFE matrix and it shows that preferably the amount of CNF in the solid fraction should be 5 wt % or more. In even other words, the ration between CNF and PTFE in the suspension is preferably 1:20 or higher.

Figure 1 further shows a schematic internal configuration of the composite 4 which is the state of the composite coating 2 after the thermal annealing step. The solvent 13 has evaporated and the PTFE particles 11 have molten during the thermal annealing step. The molten PTFE 11a then flows or creeps into the cavities which are formed by and in between of the CNF structures 12 that were formed in the coating layer 2 after the evaporation of the solvent 13. During the cool down phase after the heat treatment, the PTFE solidifies again and the composite structure as schematically illustrated in Figure 1, indicated by reference sign 4, is formed.

Each of the two solid components of the suspension 10 contributes to the desired functionalities of the coating: PTFE, being a tough, hydrophobic and chemically resistant fluoropolymer, serves as a base material as demonstrated by its already widespread commercial application as a water-repelling coating. On top of this, the CNF 12 modify the surface and bulk properties to match the requirements in view of thermal conductivity and condensation. The addition of CNF 12 introduces, e.g., micro- and nanostructures to the surface, in particular beneficial for superhydrophobicity. Regarding the bulk of the nanocomposite coating 2, the exceptional mechanical strength and thermal conductivity of CNF 12 reinforces the PTFE matrix (formed by the molten and the solidified PTFE) and lowers its thermal resistance respectively.

It was further found that before the annealing step, the nanocomposite coating 2 has a powdery, fragile morphology, whereas it has the high durability, as discussed, above after the annealing.

It is furthermore technically beneficial if the coating layer 2 thickness is not too thick in order to keep the thermal resistance low and to enable a high durability. In other words, a minimized or minimal coating thickness is very desirable for achieving efficient condensation heat transfer. A thick polymeric coating could counterbalance the heat transfer benefit gained from dropwise condensation on hydrophobic surfaces. Preferred thicknesses of the coating layer 2 are in the range of one or more micrometers, e.g. 1, 2, 5 or 10 micrometers.

In a preferred example in which a dichloromethane solvent 12 was mixed with 1 wt % of solid particles, i.e. CNF 12 and PTFE particles 12 (ratio 1:10), a coating thickness was found to be 0.85 ± 0.30 µm for pure PTFE (comparative example) and a thickness of 2.04 ± 0.35 µm was achieved for the PTFE/CNF coating 2. The slightly higher coating thickness of the PTFE/CNF coating layer 2 can be attributed to the rather sparse packing of nanofibers. The thickness of the layers was measured by drilling a hole with a focused ion beam. Tilting the sample and scanning electron microscopy can then be used to image the cross sections and measure the height of the layer.

By weighing the substrate 1 before and after spraying the suspension 10 thereon, the area density of the PTFE/CNF coating 2 of the above preferred example could be determined to be 7.0 ± 3.9 µg mm⁻², and for a coating thickness of about 2 µm, the volume density was 3.5 ± 2.0 mg mm⁻³.

Thus, there herein described preferred example in which a spray coating is employed allows to achieve a very thin spray composite coating layer 2. Further, a coating layer 2 of about 0.8 to 2.5 micrometers thickness is considered very preferable to enable significant condensation heat transfer enhancement through JDWC while maintaining exceptional surface robustness. The thickness of the coating layer 2 can be controlled during the application of the suspension 10 by continuous weighing of the substrate and/or by controlling the spraying parameters, including spraying pressure, spraying time, spraying nozzle (or amount of liquid ejected per unit time) and distance to the surface to the coated as well as absolute and relative (to each other) orientation of the substrate 1 and of the spraying nozzle. For example, the substrate 1 may be placed horizontally and the nozzle may be held vertically arranged above with a predetermined distance to the substrate 1. Depending on the nozzle being used, the pressure being applied to push out the suspension 10 from the nozzle and the like, the parameters may be varied to generate the desired coating layer thickness.

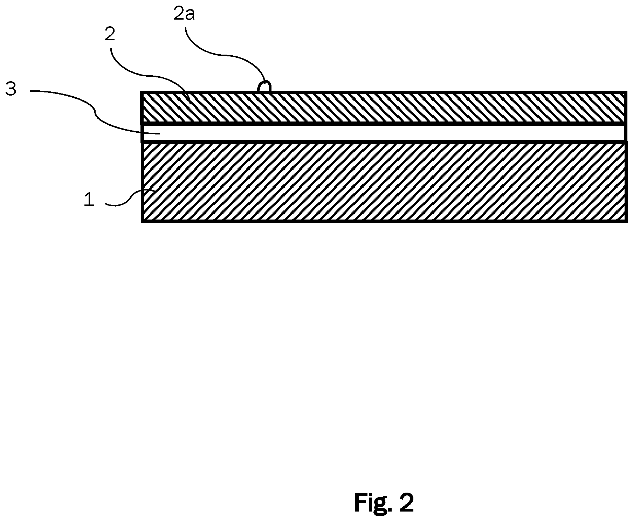

Figure 2 schematically shows a substrate 1 that is coated with the composite coating (layer/material) 2 as described in connection with Figure 1. However, Figure 2 shows a further preferred modification of the present disclosure for which a metal layer 3 is provided between the substrate surface to be coated and the composite coating layer 2. The combination thereof may also be termed "layered material" in the following. The technical benefits will be explained in detail in connection with the following description.

In the example of Figure 2, a substrate 1 was coated with a metal layer 3 and the metal layer 3 was coated with the composite coating layer 2. In other words, the method which was used for the fabrication of the example as shown by Figure 2 includes an additional metal coating step. Specifically, before the coating of the suspension 10 is performed, the metal layer 3 is deposited onto one or more surfaces of the substrate 1. In the present example of Figure 2, the upper surface of the substrate 1 is coated with the metal layer 3. Additional surfaces, such as the side surfaces of the lower surface, may be coated as well.

In even other words, if a metal layer 3 is applied, a first step of the herein disclosed method involves the application of a thin metal layer 3 as a so-called "primer" or "primer layer". Applying such an ultrathin sandwiched metal primer (between the composite coating 2 and the thermally conductive substrate 1) advantageously further alleviates constraints with regard to the durability of the coating layer 2.

In a preferred example, an aluminum layer, which may be 50 nm to 500 nm thick, preferably 100 nm to 250 nm and very preferably 120 nm to 170 nm, is deposited on a substrate 1 (e.g. copper) by known evaporation techniques, such as PECVD or CVD. This metal layer 3 then acts as a coating primer. The thermal resistance across the introduced aluminum-copper interface is negligible, so is through the aluminum layer 3 due to its very low thickness and high thermal conductivity. The metal of the metal layer 3 may also be palladium, gold, platinum, chromium, titanium or any other metal preferably having a high thermal conductivity.

In a further preferred modified example/aspect, surface pre-treatment steps may be added to the herein disclosed method which can further increase the durability and robustness of the coating 2. For example, the metal layer 3 may be conditioned with a plasma applied to the upper surface of the metal layer 3 (the one which is shown in Figure 2 with the composite coating 2 provided thereon). The plasma treatment step which would be performed after the deposition of the metal and before the deposition of the suspension 10 on the metal layer 3, may further increase the adhesion between the composite coating 2 and the metal layer 3. The increased adhesion improves the robustness of the coating layer 2 so that it has an increased longevity.

For example, oxygen plasma may be applied which can help to clean and activate the surface with hydrophilic groups further enhancing coating adhesion.

The optional steps of providing a primer layer 3 and/or of applying a plasma to the primer layer 3, further improve(s) the adhesion of the coating 2. After the optional priming process, which may include the metal layer application and/or the plasma treatment, the spray-coating and subsequent thermal annealing are applied.

The following Figures 4 through 8 (including sub-Figures) show scanning electron microscope and optical microscope images as well as material properties measurements which were taken from/measured with test samples produced in accordance with the above described method. Furthermore, in some of the Figures 4 to 8 comparative examples (alternative termed comparative test samples) were used for comparing the properties of the composite coating layer 2 with other coating layers.

Figure 4 shows scanning electron micrographs of surfaces of the coating layer 2 (alternatively termed composite coating layer, PTFE/CNF, composite coating, and the like) according to the disclosure and a comparative example for which only PTFE was coated onto a substrate 1. The surfaces shown in Figure 4 correspond to the surface 2a of Figure 2.

The test samples which are depicted in Figures 4a to 4f include the composite coating layer 2 (i.e. the PTFE/CNF layer). These test samples were manufactured by using a dichloromethane suspension 10 which included PTFE micro particles 11 with an average dimeter of approximately one micrometer and CNF 12 with lengths of 20 - 200 µm. The suspension 10 was directly sprayed on a metal layer 3 coated on the substrate 1. The metal layer 3 was made from aluminum and the substrate 1 was made from copper. The thermal annealing was performed at, e.g., 400 °C in a nitrogen-rich environment to inhibit the oxidation of the metal substrate 1. The annealing melts the PTFE powder/micro particles 11 which then diffuse into the CNF network which has formed on the substrate 1 after the spray-coating. In the resulting nanocomposite coating layer 2 about 10 wt. % CNF was integrated within the PTFE matrix.

In more detail as to the manufacturing of the samples used for the tests of Figures 4a to 4f: The substrates 1 are copper plates (EN CW004A, Cu ≥ 99.9%) precision cut to size 50 mm × 20 mm × 1.5 mm. Further, the copper substrates 1 were cleaned with acetone, isopropanol and hydrochloric acid (37%), sequentially, in an ultrasonicated water bath (USC300D, VWR). They were then rinsed with deionized water and dried with nitrogen. The cleaning, rinsing and drying described here can be considered as further optional method steps of the general fabrication method disclosed herein and this can further enhance the adhesion of the layers because of the very clean surfaces which can be achieved with these steps.

Further, in the examples of Figure 4, a 150 nm thick layer of aluminum was deposited onto the copper substrate 1 by e-beam evaporation (BAK 501LL, Evatec), followed by 3 minutes of oxygen plasma (Femto, Diener Electronic) at 100 W for surface activation. The deposition may also be performed by way of PECVD or CVD.

Further, in the case of the specific test samples of Figure 4, the suspension was produced as follows: a vial of 90 mg PTFE (in powder form, 1 µm particle size, Sigma-Aldrich) was dispersed in 4.95 g of dichloromethane (Sigma-Aldrich) in an ultrasonicated water bath; and 10 mg CNF (> 98% carbon basis, 100 nm × 20 - 200 µm, Sigma-Aldrich) was mixed with 4.95 g of dichloromethane with a probe sonicator (Vibra-Cell VCX 130, Sonics) in another vial. The two vials were then mixed together, followed by an ultrasonicated water bath, resulting in a 1 wt. % PTFE/CNF suspension 10 in dichloromethane, the suspension weighing a total of 10 g. It is noted that more or less suspension may be produced and the mixing of two liquid suspensions in two different vials before mixing the two different liquids in a shared vial may also be performed differently; e.g. the solid particles may be mixed into a single vial with solvent therein. The solids may be premixed and then added to the solvent or the solids may be added sequentially to the solvent. Further, the mixing with the probe sonicator allows establishing a homogenous suspension. Alternatively, the stirring or mixing may be performed with a different device, such as a magnetic stirrer or the like.

The above described suspension 10 was used to spray-coat three samples simultaneously with a VL double action - internal mix - siphon feed airbrush (Paasche Air Brush) at a distance of ∼ 20 cm with an air pressure of 3 bar. Different distances and air pressures are usable depending on the suspensions concentration of solids, the solvent 12 being used, the desired thickness of the coating layer 2 and the like.

Preferably, the suspension may be continuously shaken during spraying. The surfaces (i.e. the coated substrate 1) are subsequently annealed in an atmosphere of nitrogen at 400 °C (FB1310M-33, Thermoline) for 30 minutes and cooled slowly to room temperature in the nitrogen environment.

The preparation of the suspension for the comparative PTFE coating was similar. 100 mg PTFE was mixed with 9.9 g dichloromethane in an ultrasonicated water bath. The suspension was then sprayed and annealed with the same parameters. For a CuO nanostructured surface of another comparative test sample, the copper substrate 1 is cleaned in an ultrasonicated water bath with acetone, isopropanol and deionized water, sequentially, then dried with nitrogen. The cleaned substrate is then immersed in 2 M hydrochloric acid for 20 - 30 seconds. Then it is transferred into a mixture of NaClO₂, NaOH and Na₃PO₄:12H₂O at 95 °C ± 3 °C for 4 - 5 minutes, followed by rinsing with deionized water and drying with nitrogen.

Figures 4a, 4b show two different magnifications of the surface 2a (corresponding to the non-covered upper surface in Figure 2) of the composite coating layer 2 before the annealing step. Figure 4b includes some reference signs for examples of the PTFE 11 and the CNF 12 (as well as Figures 4c and 4d). The Figures 4c and 4d show said surface(s) 2a after the annealing. The scale bar of Figures 4a and 4c is 50 micrometers and the scale bar of Figures 4b and 4d is 2 micrometres.

Figure 4e shows a comparative only-PTFE layer, i.e. without CNF content. The insets of Figures 4d and 4e (insert scale bar 1mm) each show a 10 µL-droplet resting on the surfaces with the corresponding values of ACA and CAH. The inserts clearly corroborate the superior ACA and CAH of the test sample compared to a comparative only-PTFE layer.

Further, Figure 4f shows cross sections of an only-PTFE layer (top) and a PTFE/CNF layer (bottom). Both coatings are sprayed on, e.g., a copper substrate 1 followed by annealing for thickness measurements. Merely for better visual determination, a layer of platinum is shown deposited in situ on top of the PTFE/CNF 2 to allow easier determination of the top of the coating. The scale bar is 1 µm, wherein the vertical scale bars are shorter due to projection from an angled view.

In detail: It can be seen from the Figures 4a and 4b that, prior to annealing, the as-sprayed PTFE/CNF is present in the form of discrete micro particles (like a PTFE powder) and fibers (CNF) with high porosity. After annealing, the molten PTFE particles 11a blend together and lock the CNF 12 in place (Figures 4c, 4d). Still, after annealing, a high degree of hierarchical surface roughness (micro- and nanoscale) can be observed in the images. In particular, the PTFE 11a has formed microscopic flakes (Figure 4c) which enclose the high-aspect-ratio CNF 12. The nanofibers 12, randomly dispersed and bound by the polymer matrix, achieve the nanostructuring beneficial to transition condensate microdroplets to mobile Cassie-like state.

It is noted that the present two comparative materials/test samples were used: 1) a copper oxide (CuO) superhydrophilic surface, to represent typical FWC on industrial condensers, and 2) a flat hydrophobic surface, to delineate the performance changes by the addition of CNF to PTFE. The superhydrophilic surface consists of approximately 1 µm-tall CuO nanoblades fabricated with a known hot alkali process and it serves as a stable reproducible control case for FWC on copper surfaces. On the other hand, the flat hydrophobic surface is comprised of only PTFE (Figure 4e). Its fabrication process is similar to the PTFE/CNF nanocomposite 2, except that the CNF are excluded from the suspension 10. The overall solid weight fraction is kept as the same. There is no prominent roughness on the flat hydrophobic PTFE surface.

The results of the comparison shown by the Figures 4a to 4f underpin that an easily scalable method is presented which can provide a multifunctional passive interface that is hydrophobic, thermally conductive and robust. It is optimized for greatly improving condensation heat transfer. Furthermore, the combined cost of fabrication is maintained low and thus attractive for real-world industrial applications.

Other previously known approaches to achieve thin hydrophobic coatings have either limited robustness (e.g. self-assembled monolayers) or unproven economical scalability. An additional fundamental advantage of the herein described composite coating compared to previously known ones is that with the fabrication method as disclosed herein, no separate surface structuring is required (e.g. chemical etching or lithography). The hierarchical surface morphology required for superhydrophobicity is formed spontaneously upon spraying and subsequent annealing.

It is noted that the above discussion of specific examples used for the tests shown by Figures 4a to 4f are provided for illustration of the superior coating layer performance. A comparable, improved coating layer performance of the herein-disclosed composite coating 2 can also be achieved if the substrate material or the metal layer material is different. The metal layer 3 , inter alia, improves the adhesion between the substrate 1 and the composite layer 2 and the overall thermal resistance of the coating (the layered material including the composite layer 2 and the metal layer 3) is not affected by the metal layer 3.

The ACA and contact angle hysteresis CAH which were found for the composite coating layer 2 of the above discussed test samples are in the range of 161.1 ± 1.8° while the CAH is 1.5 ± 0.6°. These values show that the PTFE/CNF surface is significantly more water-repellent than PTFE alone without CNF 12, which exhibits an ACA of 132.6 ± 2.5° and a CAH of 34.0 ± 2.9°. The low water adhesion of PTFE/CNF supports the phenomenon of coalescence-induced droplet jumping during condensation. The surface wettability can be characterized by measuring advancing and receding contact angles with a goniometer.

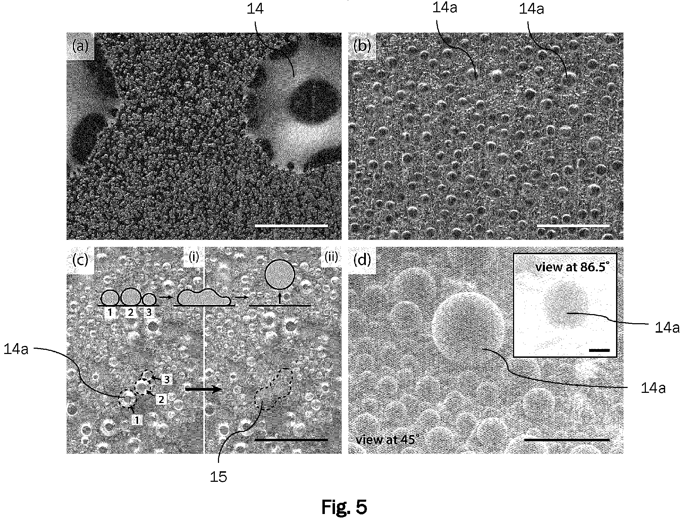

Figures 5a to 5d include optical micrographs showing the condensation behavior of different surfaces 2a placed horizontally at room conditions. Figure 5a shows a surface coating with superhydrophilic CuO. Figure 5b shows hydrophobic PTFE as a coating layer and Figure 5c shows the herein-disclosed superhydrophobic PTFE/CNF coating layer 2 (the same test samples were used as for Figure 4 in regard of pure PTFE, CuO and PTFE/CNF coatings). In Figure 5c (i) droplets 1, 2 and 3 coalesce and leave the surface spontaneously, at (ii) of Figure 5c the droplet leaves the empty space enclosed by the dashed line. The schematic illustrates the droplet jumping process.

Further, Figure 5d shows the condensation on a PTFE/CNF coating layer 2 under environmental scanning electron microscopy. The test sample was held at 45° with respect to the electron beam and maintained at ∼ 2 °C with a cooling stage. Water vapor pressure was gradually increased to initiate nucleation. The nearly spherical shapes of condensate droplets shown by Figure 5d suggest that the superhydrophobicity is maintained for condensed water and the surface is suitable for condensation heat transfer enhancement. The scale bar of Figure 5d is 150 µm. The inset of Figure 5 shows the sample held at 86.5° during earlier stages of the condensation when the droplets are smaller (inset scale bar: 10 µm).

In detail: To evaluate the microscale condensation behavior and to compare it with previously known coatings, surfaces of comparative test examples Figures 5a and 5b and the presently disclosed coating layer 2 (test samples of Figure 4) were horizontally placed on a cooling stage and events were observed with optical microscopy at room conditions. In Figures 5a, 5b, and 5c, one can see how condensation evolves on the superhydrophilic CuO reference surface, the PTFE flat reference surface and the PTFE/CNF surface respectively. A film of water 14 is seen on the CuO surface in Figure 5a, and non-circular droplets with their contact lines pinned by the structures form on top of the film of water.

On the other hand, on the flat PTFE surface in Figure 5b, distinct circular droplet contact lines are present, indicating that the droplets 14a have shapes of spherical caps and are generally free from pinning by the surface, a factor for droplet mobility to facilitate dropwise condensation. Coalescence-induced droplet jumping is observed only on the PTFE/CNF surface as shown in Figure 5c. E.g., three droplets 14a (indicated by arrows, circles with broken lines and numbers "1", "2", "3" in panel (i) of Figure 5c) grow by condensation, coalesce and leave the surface spontaneously due to the conversion of the excess surface energy into upwards kinetic energy from a low-adhesion surface.

The empty space 15 without water droplets, left behind after a coalescence jumping event (region enclosed by a broken line in panel (ii) of Figure 5c), enables new nucleation events to occur on the surface without undesirable thermal resistance from existing liquid water. JDWC is the predominant departure mechanism for droplets condensed on PTFE/CNF coating layers 2.

Further, the upper part of Figure 5c, bridging panels I to II, shows a side-view schematic of the three droplets 14a in Figure 5c, panel I, which coalesce and then jump of the surface (panel II).

Observation of the condensation behavior on PTFE/CNF coating layer 2 in situ with an environmental scanning electron microscope (ESEM) is shown in Figure 5d, the condensed droplets 14a exhibit nearly spherical shapes, suggesting high contact angles and a high repellency for small droplets during condensation. The inset in Figure 5d clearly shows the high contact angle for an individual condensate droplet 14a. While a superhydrophobic surface may exhibit water repellency for deposited droplets, condensation nuclei may grow within the micro- and nanostructures to result in Wenzel-state droplets. However, it is evident that the PTFE/CNF nanotexture coating layer 2 is able to repel condensate droplets of the smallest size.

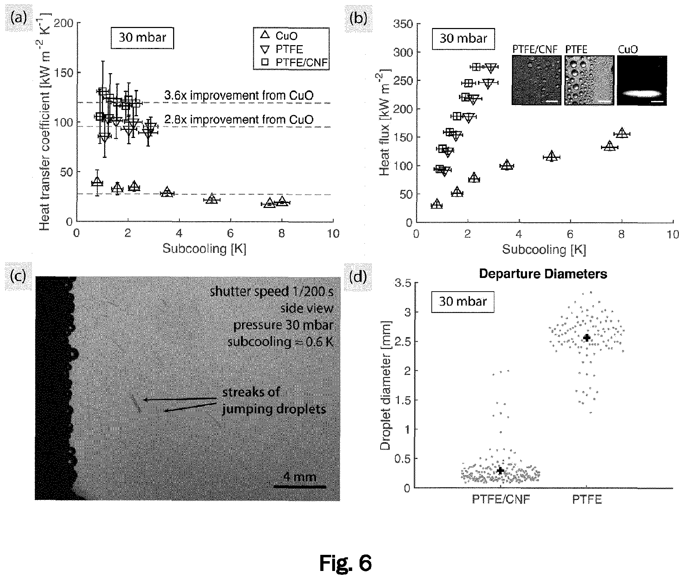

Figure 6 shows measurements of vertically oriented superhydrophobic PTFE/CNF coating layers 2 (samples fabricated in the same way as the samples used for the tests shown by Figures 4 and 5), hydrophobic PTFE and superhydrophilic CuO (the latter two are comparative test samples measured with samples produced like the samples used for the tests shown by Figures 4 and 5) under 30 mbar saturated steam flowing horizontally across over the surfaces. The flow speed is ∼ 4 m s⁻¹ except in Figure 6c. Figure 6a shows heat transfer coefficients at different subcooling values. Dashed lines are averages of the measured HTCs for each surface. The data points shift to the lower subcooling regime for surfaces with higher HTC as the surface temperatures approach the steam temperature with lower thermal resistance to condensation at the interface. Figure 6b shows corresponding heat flux measurements of the three surfaces at different subcooling values under the same steam conditions. Insets are photographs of the three surfaces during condensation. The average droplet size on PTFE/CNF coating layer 2 is visibly smaller than that on PTFE, and a film of water is observed on CuO (inset scale bar: 2 mm).

Figure 6c shows coalescence-induced jumping of condensate droplets from PTFE/CNF at a steam pressure of 30 mbar for an exposure time of 5 ms (shutter speed 1/200 s), viewed from the side. The paths of the jumping droplets are seen as streaks. These jumping events are highly frequent and comprise of droplets of various sizes. Steam flow speed is smaller than 4 m s⁻¹ here because of the modifications made to the flow chamber to allow side view.

Figure 6d shows droplet departure diameters on PTFE/CNF coating layers 2 and PTFE. The small thick crosses indicate mean measured diameters of a surface. Droplets jumping at smaller sizes may not be captured and measured when they are below a resolution limit of ∼ 20 µm per pixel. Most of the departing droplets from PTFE/CNF coating layers 2 have diameters below 0.5 mm whereas most from PTFE have diameters above 2.5 mm. The subcooling of both surfaces was 1 K.

More specifically with regard to Figures 6a to 6d: The heat transfer efficiency of PTFE/CNF coating layers 2 was measured with direct measurements of HTCs for a range of steam temperatures and velocities. The surfaces were tested in one test chamber designed to operate at a sub-atmospheric steam saturation pressure of 30 mbar, and another test chamber designed to operate at a steam saturation pressure above atmospheric of 1.42 bar. While the low-pressure chamber mimics realistic operating conditions of industrial condensers used in thermal power plants, the high-pressure chamber provides insights into the ability of PTFE/CNF coatings 2 to withstand more hostile conditions and provides an accelerated aging test for the coating, challenging its performance limits in conditions much harsher than those encountered in the majority of industrial settings.

Measurements of the heat transfer at low pressure were performed as follows: First, the surfaces of test/comparative samples were expose to saturated steam at 30 mbar (corresponding saturation temperature 24.08 °C) in a low-pressure chamber (the samples which were used were produced like the samples, e.g., used for the tests of Figures 4 and 5). The surfaces are oriented vertically while the steam flows horizontally across at ∼ 4 m s⁻¹ over the samples, which are placed on one end of a copper block, with its other end actively cooled with a recirculating chiller set at different temperatures. Condensation heat flux, steam temperature and sample surface temperature were measured.

The heat transfer performance of PTFE/CNF coating layers 2 and the two reference/comparative surfaces at low steam saturation pressure are compared in Figures 6a and 6b. In Figure 6a, the subcooling range decreases with increasing average HTCs of the surfaces, and there is a general shift of data points to lower subcooling values. This is a direct result of the surface temperature approaching the steam temperature due to the lower thermal resistance to condensation of a better performing surface. An average was determined for the HTCs obtained for each surface for comparison. At 30 mbar, the PTFE surface, which shows DWC, exhibits a 2.8x improvement in average HTC from the CuO surface which shows FWC, while PTFE/CNF 2 which shows JDWC exhibits a 3.6x improvement. Figure 6b plots the heat fluxes of the three surfaces at different subcooling values, where the heat transfer improvement brought by PTFE/CNF 2 can be seen from a different perspective. In general, for the same subcooling, PTFE/CNF 2 permits a higher heat flux across the interface. Images of the surfaces during condensation are shown as insets in Figure 6b. The average droplet size on PTFE/CNF 2 is visibly smaller than that on PTFE, a desirable indication of a more efficient removal of condensate droplets before they grow to significant larger sizes, critical for enhancing heat transfer.

This efficient condensate shedding for the case of PTFE/CNF 2 is caused by frequent coalescence-induced droplet jumping from the surface as shown by the paths of the jumping droplets viewed from the side in Figure 6c. While coalescence-induced droplet jumping is the predominant mechanism for droplet removal on PTFE/CNF, gravity-assisted droplet removal, which is also underpinned by the much larger departure diameters, is the sole mechanism on PTFE.

Further, the droplet diameters were measured at their departure from PTFE/CNF and PTFE, as shown in Figure 6d. As droplet jumping departure is, in general, much more frequent than gravity-assisted departure, departure diameters were measured for all the droplets observed, i.e. above our resolution limit of ∼ 20 µm per pixel, for ∼ 2 s for PTFE/CNF 2 and ∼ 110 s for PTFE. It is noticed that most of the departing droplets on PTFE/CNF 2 are restricted to diameters below 0.5 mm. It is emphasized here that numerous jumping events may occur at diameters below a resolution limit of the optics used. In general, the mean droplet departure diameter measurable on PTFE/CNF 2 (*d̅* = 290.2 µm) is an order of magnitude smaller than on PTFE (*d̅* = 2564.4 µm). The frequency of departure events is 95.3 cm⁻² s⁻¹ on PTFE/CNF 2 whereas PTFE records a frequency of 1.1 cm⁻² s⁻¹, almost two orders of magnitude lower.

Heat transfer measurements at high temperature was performed as follows: To evaluate the performance and resilience of the surfaces in more hostile environments, the surfaces of test/comparative samples were subsequently placed vertically in a high-pressure flow chamber and exposed to superheated steam at 111 °C and 1.42 bar, flowing vertically downwards, i.e. in the gravitational direction. The surfaces were tested at two steam flow speeds, namely ∼ 3 m s⁻¹ (laminar, Reynolds number Re ≈ 1300) and ∼ 9 m s⁻¹ (turbulent, Re ≈ 3900), to study the effects of vapor shear on both droplet shedding and the coating.

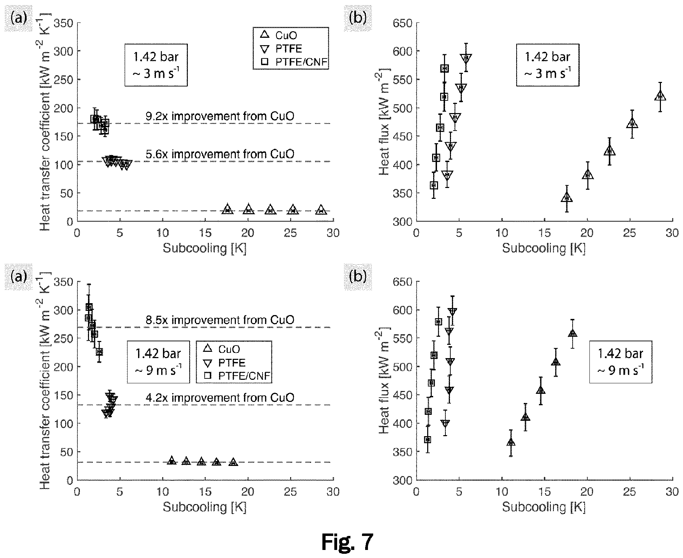

The performance of the test/comparative samples under these condensation conditions are compared in Figure 7 (the samples which were used were produced like the samples, e.g., used for the tests of Figures 4 and 5). At ∼ 3 m s⁻¹, a 5.6x increase was observed in average HTC for DWC on the PTFE surface compared to FWC on the CuO surface, and a remarkable 9.2x increase for JDWC on the PTFE/CNF surface 2a. The HTCs at ∼ 9 m s⁻¹ are higher for all 3 surfaces due to higher shear forces to shed non-jumping droplets on the surfaces and convective effects. The improvements of JDWC from FWC follow a similar trend, where a 4.2x increase in average HTC can be observed for DWC on PTFE and an 8.5x increase for JDWC on PTFE/CNF.

Figure 7a: The heat transfer coefficients of vertically placed superhydrophobic PTFE/CNF 2, hydrophobic PTFE and superhydrophilic CuO at different subcooling values under 111 °C superheated steam at 1.42 bar, flowing at ∼ 3 m s⁻¹ downwards over the vertically placed surfaces are shown. Dashed lines are averages of the measured HTCs for each sample. The data points shift to the lower subcooling regime for surfaces with higher HTC, similar to the low-pressure case. Figure 7b shows corresponding heat flux measurements of the surfaces of the samples at different subcooling values at the same steam conditions which show an improved heat flux over the entire measurement range for the PTFE/CNF coating layer 2. Figure 7c includes the values of heat transfer coefficients of the samples at different subcooling values under the same steam conditions except the flow speed is increased 3x, i.e. ∼ 9 m s⁻¹, downwards. Similar shifting of the data points is observed and, as reproduced by Figure 7d, corresponding heat flux measurements of the samples at different subcooling values at the same steam conditions, flowing at ∼ 9 m s⁻¹.

The above heat transfer characterization in the high-pressure chamber confirms that PTFE/CNF coatings 2 can deliver even more outstanding HTC improvement in more demanding adverse environments as compared to the low-pressure mild conditions.

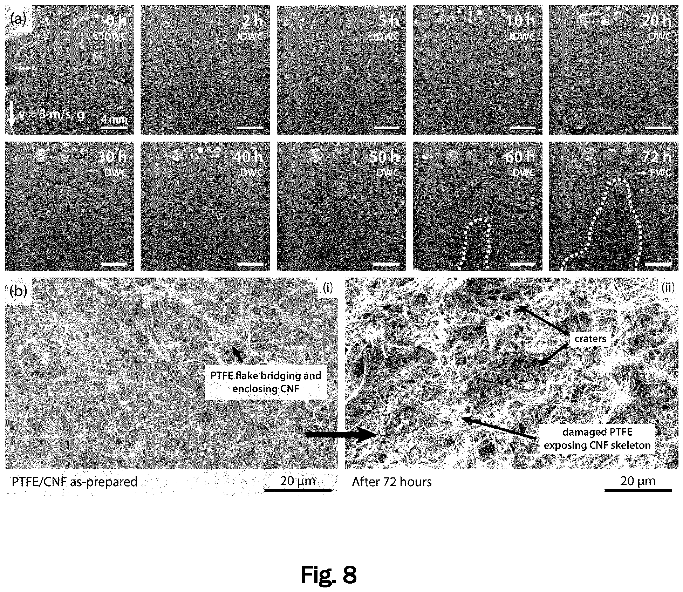

Durability of PTFE/CNF coating layer 2: Test samples were produced in accordance with the samples explained in connection with the description of Figure 4 and the nanocomposite coating layer 2 was tested in a high-pressure flow condensation chamber by exposing the surface 2a to 1.42 bar superheated steam at 111 °C, flowing at ∼ 3 m s⁻¹ for an uninterrupted period of 72 h. Changes in the condensation dynamics and the underlying surface degradation were tracked with a high-speed camera at several time intervals over 72 hours. Images of the PTFE/CNF surface 2a were extracted at different times during the 72-hour durability test to show the evolution of condensation behavior over time (Figure 8a). At the very beginning (0 h) the view is partially obstructed by unavoidable fogging on the viewing window due to condensate droplets jumping from the surface 2a. At 2 h time, a stable water film is formed on the viewing window, eliminating the fogging effect. The jumping behavior of the droplets from the surface 2a continues uninterrupted. Up until 10 h test time, JDWC remains the predominant mode of condensation. After that, an increase in the average droplet size on the surface occurs and DWC takes over as the predominant mode. After 50 hours of further of continuous exposure, a region of FWC emerged at 60 h at the bottom of the surface 2a, enclosed by the dashed line. This region expands slowly to take up a significant portion of the surface 2a at 72 h. The droplets in the DWC region have become less circular as well at 72 h time, indicating pinning of the three-phase contact lines by the underlying microstructure. However, despite the growth of this water film, several droplet jumping events can still be observed close to the upper edge of the sample at 72 h.

Apart from the long-term sustained JDWC and DWC demonstrated above, the strength of the composite coating 2 is quantified by an estimation of the stresses it has tolerated. During the 72-hour durability test, the maximum shear stress exerted by the steam flow onto the surface is estimated, from flow calculations, to be at least 65 mPa (mean shear stress at least 57 mPa), which translates to an equivalent mass load of 6.6 µg mm⁻², 94% of the own mass of the PTFE/CNF coating 2. It is noted that additional shear stresses are present before the flow chamber is brought into steady operation, and the shear imposed by condensate droplets on the surface is not taken into account, which consider only the steam flow. It is assumed that as the average droplet diameter on the surface 2a increases during the course of the durability test, the droplets exert a larger stress onto the coating thus accelerating further deterioration. Thus, the above stated shear stress tolerated by the composite coating 2 is a conservative estimate. It was observed that both the deterioration transitions from JDWC to DWC and from DWC to FWC start at the bottom of the surface. As non-jumping droplets depart by gravity, they sweep droplets along their path and reach the largest size at the bottom of the sample. Therefore, the shear stresses experienced at the bottom are constantly higher than the upper regions.

Further, it was compared the surface topography of PTFE/CNF coating layer 2 before and after the durability test with scanning electron microscopy (Figure 8b), focusing on the region in which FWC becomes visible after 72 h of steam exposure. The topography of the surface is clearly modified. Despite the CNFs 12 being still present and randomly dispersed over the surface, the PTFE matrix appears to be damaged and there are no longer smooth PTFE flakes bridging across and enclosing the fibers, leaving the skeleton of CNF 12 exposed. The loss of PTFE creates new larger-sized and deeper microstructures in the form of craters on the surface. As nucleation occurs within these deeper craters, droplets may become trapped, resulting in the transition to the Wenzel-state. Eventually, the water condensed in the deeper and larger microstructures may interconnect and form a full film of water, much like the case of the superhydrophilic CuO nanostructured surface, thus leading to FWC.

In other words, Figure 8b (i) and (ii) show scanning electron micrographs of (i) an as-prepared PTFE/CNF surface 2a; and (ii) after the 72-hour durability test. The as-prepared PTFE/CNF coating layer 2 exhibits PTFE flakes bridging across and enclosing CNF 12. These small and relatively flat PTFE regions are responsible for the microstructure and the securely embedded CNF 12 is responsible for the nanostructure. After 72 h of steam exposure, the PTFE matrix is damaged and the CNF 12 skeleton is exposed, leading to the loss of the original microstructure characterized by the PTFE 11. A new microtopography is shaped in the form of craters, which are much larger than the flakes in (i). These craters trap condensation nuclei and facilitate Wenzel-state droplets and contact line pinning, leading to reduced condensate removal.

The surface wettability of the PTFE/CNF surface 2a after the durability test was measured and returned an ACA of 152.0 ± 1.9° and a CAH of 12.7 ± 2.9° at three random locations on the exposed condensing surface 2. The decrease in ACA and the increase in CAH is attributed to the change of the surface microtopography as explained above. The accelerated durability test proves that PTFE/CNF coating 2 can withstand harsh conditions for an extended period of time while, in a host of practical applications, the conditions are much milder characterized by significantly lower steam temperature and pressures.

### Summary

It is disclosed a versatile, scalable and economic method to fabricate exceptionally robust, sprayable superhydrophobic PTFE/CNF nanocomposite coatings (coating materials) 2, able to sustain prolonged JDWC under extremely harsh conditions. Technical advantages of this method are, inter alia: 1) no substrate pre-structuring is required, 2) surface priming with a metal layer allows for even enhanced coating adhesion without compromising the heat transfer, 3) thin and superhydrophobic coating with thermally conductive nanofillers is realized via a facile spray method, and 4) high adhesion to substrate and the formation of the fiber network, together with PTFE annealing, give rise to an extremely robust coating given its minimal thickness. In terms of heat transfer, this translates to an order of magnitude (9x) improvement in HTC compared to our FWC reference and almost doubled the HTC compared to the DWC reference. In other words, it is provided a passive and multifunctional, i.e. hydrophobic, thermally conductive and robust, material system that proves to be a promising superhydrophobic material for industrial condensing and/or water collection applications. Such a material could enable more efficient processes, for example, in steam power generation and other condensation-based energy conversion systems, thus contributing to the global reduction of carbon dioxide emissions.

Further summarized, a preferred method for applying/fabricating the coating may include the following steps and technical benefits:- It may be preferred, as a first preferred step, to apply an ultrathin aluminum layer, wherein ultrathin may preferably include a thickness of 200 nm or less, which acts as a coating primer. It is preferred to use a metal evaporator. By this technically beneficial step the coating adhesion can be expanded to a vast number of different substrates by applying thin sandwiched metal primers (between the coating layer and the thermally conductive substrate). A thickness of, e.g., 200 nm does not compromise the overall heat transfer, especially if a good thermal conductor like a metal and preferably aluminum is used.
- Further, it may be preferred, as another step to apply an oxygen plasma process/step to the primer layer (metal layer) which helps to clean and activate the surface with hydrophilic groups for even further enhanced coating adhesion.
- The thickness of the composite coating layer 2 may be as small as few micrometers or even less which has typically proven to be difficult to achieve for a robust superhydrophobic material. Superhydrophobic materials typically require two scales of roughness, micro and nano, and the chemistry of the material has to be also hydrophobic. Here two components which are both hydrophobic (PTFE and CNF) were used. A probe sonicator used during the preparation of the dispersion, as another preferred option/step, was found to enable better dispersion of the CNF 12 and/or the PTFE 11 powder in the solvent. Dispersing CNF 12 by other means is technically difficult and often requires chemical functionalization. However, chemical functionalization can alter hydrophobicity. The small thickness achieved was also enabled by the use of very low concentrations of the ingredients in dichloromethane. At, e.g., about only 2 µm thickness, a uniform coating 2 with no defects, which at the same moment exhibits the required micro/nano surface hierarchy, was achieved. The technical benefits can all be achieved without sophisticated or expensive lithography techniques. Moreover, due to the nature of the method, nanotexturingand hydrophobization of the surface 2a of the coating 2 can be achieved in a single step.
- Further, the inventors have found that it is technical beneficial for increasing the robustness of the coating layer 2 to introduce an annealing step, where the PTFE 11 melts. This melting of the PTFE 11 leads the powder to be transformed in an interconnected matrix, holding tight the CNF 12 on this substrate 1. Additionally, it is preferred to perform this annealing in an atmosphere of nitrogen (or another non oxidizing atmosphere) to avoid oxidation of underlying metal and thus achieve high adhesion of the coating 2 to the metal substrate 1 or the metal layer 3. This has tremendous benefits in the material durability, leading to prolonged use for condensation heat transfer, while at the same moment PTFE 11 provides an excellent hydrophobic and chemically resistant host matrix.
- Although gravity independent condensation removal can be achieved with other superhydrophobic materials, the present disclosure provides inherent advantages. One of these is the presence of the PTFE 11 and CNF 12 which are not chosen only for their hydrophobicity but because they provide additional benefits that create synergy for the heat transfer enhancement. First of all, the PTFE 11 (other than its excellent hydrophobicity) is one of the most chemically inert and temperature-resistant organic compounds since it can easily withstand values up to 300 C, making it an excellent candidate for condensers that operate at harsh environments. On the other hand, CNFs 12 are extremely thermally conductive (thus enhancing heat transfer) and their fibrous nature, interlocked within the molten PTFE 11, leads to a reinforced robust coating 2. As a result, the disclosed nanocomposite coating 2 is superhydrophobic, significantly more thermally conductive than conventional hydrophobic organic layers, and more robust due to its reinforced structure. Together with its small thickness, this combination makes the perfect material candidate for condensation heat transfer.
- The herein disclosed method can be easily applied to almost any surface of any shape (such as flat surfaces, pipes etc.) and thus, can be easily scaled for use in industrial condensers to greatly enhance its heat transfer. No structuring of the substrate is required since the coating 2 contains all the required properties. It was found that the performance of the coating surface 2a both significantly increased heat transfer by 900%, and enhanced durability under highly demanding condensation conditions and, moreover, this is the first surface coating 2, to the best of the inventors' knowledge, that can sustain jumping dropwise condensation under shear flow of steam at temperatures as high as 111 °C. These conditions are much more severe as compared to those for commercial condensers and show the durability and potential for industrial application of the herein disclosed coating 2 and the coating material or layered material.
- Due to the above characteristics, the coating 2 is the first, to the best of the inventors' knowledge, to meet all three of the conflicting challenges inherent in development of coatings for condensers or water collecting devices: economical scalability, significant enhancement in heat transfer efficiency and durability.

Moreover, a further preferred application of the improved condensation properties of the present disclosure/coating can be water harvesting from moist air. Hence, the present disclosure may include the aspect according to which the herein disclosed coating/coating material is employed in combination with a water collection device. During the water collection process, condensate is nucleating and growing on a collection surface of the water collection device. Current existing materials that compose water collection panels suffer from limitations in passive condensate removal due to the fact that they are not hydrophobic enough. For this reason, it is not rare at all that half of the water mass intended to be collected remains on the condensing surface. This remaining water has to be collected by scraping off the surface actively which is cumbersome and ineffective. The coating/coating material of the present disclosure, on the other hand, benefiting from its facile droplet removal mechanism, can be used for such water collection applications, rendering them completely passive, thus improved.

## Claims

1. A method for providing a composite coating layer (2) on a substrate (1), the method including
- a step of applying a suspension (10) onto the substrate (1), wherein said suspension (10) comprises a solvent (13), polytetrafluorethylene particles (11) and carbon fibers (12); and
- a step of thermal annealing of the substrate (1).

2. The method according to claim 1, **characterized in that** the suspension (10) includes a polar solvent (13) which is liquid at room temperature, polytetrafluorethylene micro particles (11) with an average diameter of 100 nm or more, and carbon nanofibers (12) which have an average diameter of 5 nm or more and an average length of 0.5 micrometer or more.

3. The method according to at least one of the preceding claims, **characterized in that** the suspension includes 0.5 wt % to 3 wt % of solid particles dissolved in a polar solvent (13) and the balance being solvent.

4. The method according to at least one of the preceding claims, **characterized in that** the suspension includes X wt% of polytetrafluorethylene micro particles (11) and Y wt% of carbon nanofibers (12), wherein the ratio of X:Y is between 1:5 and 1:20.

5. The method according to at least one of the preceding claims, **characterized in that**, the solvent (13) of the suspension is an aprotic solvent (13).

6. The method according to at least one of the preceding claims, **characterized in that** the solvent (13) of the suspension (10) is dichloromethane, and the suspension (10) consists of dichloromethane, polytetrafluorethylene micro particles (11), carbon nanofibers (12) and inevitable impurities.

7. The method according to at least one of the preceding claims, **characterized by** a step of depositing a metal layer (3) onto a surface of the substrate (1) before the step of applying the suspension (10), and the suspension (10) is applied onto a surface of the metal layer (3).

8. The method according to at least one of the preceding claims, **characterized in that** the step of applying the suspension (10) is performed by spraying the suspension (10).

9. The method according to at least claim 7, **characterized in that** a step of a plasma treatment is performed after the metal layer (3) was deposited onto the substrate (1) and before the suspension (10) is applied onto the metal layer (3).

10. The method according to at least one of the preceding claims, **characterized in that** the thermal annealing is performed after the step of applying the liquid suspension (10) in a non-oxidizing atmosphere, and the thermal annealing step includes a predetermined time interval during which a predetermined temperature is applied and a subsequent cooling off time interval.

11. A composite coating material comprising polytetrafluorethylene and carbon nanofibers (12).

12. The composite coating material according to claim 11 applied on a substrate (1) as a composite coating layer (2) in accordance with the method of at least one of claims 1 to 10.

13. A layered material including a layer of the composite coating material according to claim 11 or 12, and a layer made from metal.

14. A substrate (1) coated with a composite layer (2) formed by the composite coating material according to at least one of claims 11 or 12.

15. The substrate according to claim 14, **characterized by** a metal layer (3) between the substrate (1) and the composite layer (2), wherein the composite layer (2) is arranged on a surface of the metal layer (3).

16. The substrate according to claim 14 or 15, **characterized in that** the composite layer (2) has a thickness between 1 micrometer and 10 micrometers.

17. A device including one or more components each component having one or more surfaces, **characterized in that** the device is one of a condenser, a water collection device and a desalination device, and one or more of the surfaces are coated with a coating material according to claim 11 or 12.
